Europäisches Patentamt

**European Patent Office**

Office européen des brevets

(11) Numéro de publication : **0 338 063 B1**

(12) # FASCICULE DE BREVET EUROPEEN

(45) Date de publication du fascicule du brevet :
01.07.92 Bulletin 92/27

(51) Int. Cl.⁵ : **G11B 5/21**

(21) Numéro de dépôt : **88909560.0**

(22) Date de dépôt : **21.10.88**

(86) Numéro de dépôt international :
**PCT/FR88/00517**

(87) Numéro de publication internationale :
**WO 89/04037 05.05.89 Gazette 89/10**

(54) **TETE MAGNETIQUE D'ENREGISTREMENT LECTURE ET PROCEDE DE REALISATION.**

(30) Priorité : **27.10.87 FR 8714818**

(43) Date de publication de la demande :
**25.10.89 Bulletin 89/43**

(45) Mention de la délivrance du brevet :
**01.07.92 Bulletin 92/27**

(84) Etats contractants désignés :
**BE DE FR GB IT NL**

(56) Documents cités :
**EP-A- 0 185 406
US-A- 4 100 584
Proceedings of the IEEE, vol. 74, no. 11,
November 1986, IEEE (New York, US), F. Jeffers: "High-density magnetic recordingheads", pages 1540-1556, see figure 5**

(56) Documents cités :
**Patent Abstracts of Japan, vol. 8, no. 97
(P-272) (1534), 8 May 1984, & JP-A-598115
(MATSUSHITA DENKI SANGYO K.K.), 17 January 1984**

(73) Titulaire : **THOMSON-CSF
51, Esplanade du Général de Gaulle
F-92800 Puteaux (FR)**

(72) Inventeur : **MACHUI, Jürgen
2, rue de Plaisance
F-92340 Bourg-la-Reine (FR)**
Inventeur : **MEUNIER, Paul-Louis
23, avenue du Docteur-Arnold-Netter
F-75012 Paris (FR)**

(74) Mandataire : **Grynwald, Albert et al
THOMSON-CSF SCPI
F-92045 PARIS LA DEFENSE CEDEX 67 (FR)**

# Description

La présente invention concerne une technique magnétique d'enregistrement/lecture, et plus particulièrement une tête planétaire c'est-à-dire une tête magnétique dans laquelle les pôles magnétiques sont situés selon un même plan. Une telle tête magnétique est particulièrement utilisable dans les techniques d'enregistrement/lecture sur bandes magnétiques. L'invention concerne également un procédé de réalisation d'une telle tête magnétique.

Il est connu de faire des têtes magnétiques planétaire de la forme représentée en figure 1. Deux tels exemples sont donnés dans EP-A-0.185.406 et JP-A-59.8115.

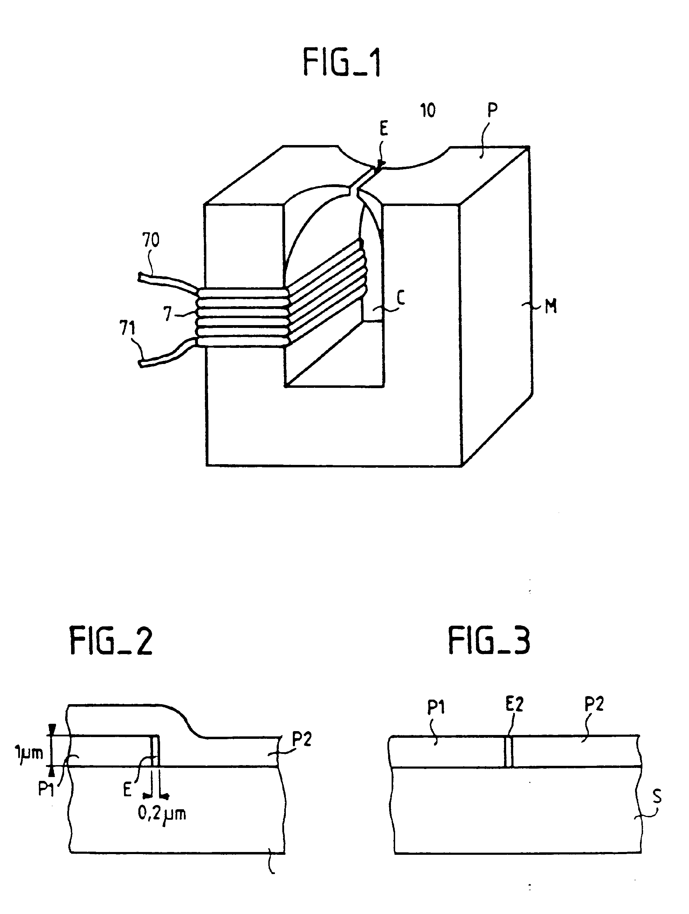

Ces têtes possèdent un circuit magnétique M comportant une face plane P. Les pôles magnétiques de la tête d'enregistrement et l'entrefer E qui les sépare, sont situés selon ce plan P. Le milieu d'enregistrement tel qu'une bande magnétique est placé, à proximité des pôles magnétiques et de l'entrefer E, parallèlement au plan P. Un bobinage d'induction de champ magnétique, alimenté en courant par les connexions 70 et 71, entoure une branche du circuit magnétique M. Comme on peut le voir sur la figure 1, une telle tête comporte, au niveau de l'entrefer E, une partie rétrécie. Cette partie rétrécie est fragile et est difficile à réaliser.

L'invention concerne une tête de ce type moins fragile et plus facile à réaliser.

De plus, dans les têtes planétaires connues, l'importance du Gap (0,2 micromètres d'épaisseur sur un micromètre de hauteur) nécessite de réaliser des croissances de matériaux non planes comme cela est décrit, par exemple dans la demande de brevet français FR-A-2.605.783 déposée le 28 octobre 1986. Ainsi, comme cela est représenté en figure 2, un pôle magnétique P1 est réalisé sur un substrat S avec une couche d'un matériau non magnétique E disposée sur un flanc du pôle P1. Une autre couche de matériau magnétique (P2) est déposée sur l'ensemble. Puis la face supérieure de la tête est usinée pour obtenir une tête magnétique planétaire telle que représentée en figure 3 avec les pôles magnétiques P1 et P2 séparés par un entrefer E.

Comme on peut le voir sur la figure 2, la couche de matériau magnétique constituant le pôle magnétique P2 doit épouser la forme de l'entrefer E ce qui perturbe les propriétés magnétiques au bord de l'entrefer E. La définition de l'entrefer et de la discontinuité qu'il engendre au niveau du champ magnétique sont donc détériorés et cela dans une zone s'étendant à une distance égale à quelques multiples de la hauteur de l'entrefer mesurée à partir de l'entrefer.

Il est cependant fondamental de réaliser des couches minces de 2 à 3 micromètres d'épaisseur pour les têtes magnétiques planétaires. Selon cette technique, le pôle magnétique P2 est donc tributaire de la hauteur de l'entrefer.

L'invention prévoit selon une variante de réalisation de résoudre cette difficulté.

L'invention concerne donc une tête magnétique comprenant un circuit magnétique de forme massive comportant une surface parallèle à la face d'enregistrement de la tête caractérisée en ce qu'elle comporte également:

– un élément non magnétique interrompant le circuit magnétique et affleurant ladite surface ;
– deux couches planaires d'un matériau magnétique formant les pôles magnétiques de la tête, déposées sur ladite surface définie par l'élément non magnétique et le circuit magnétique, recouvrent au moins partiellement le matériau magnétique situé sur les deux côtés de l'élément non magnétique, complètent ainsi le circuit magnétique de la tête et sont séparées par un entrefer situé à l'endroit du matériau non magnétique.

L'invention concerne également une tête magnétique caractérisée en ce que le circuit magnétique comporte deux pièces en forme de "U" collées l'une à l'autre par les extrêmités, l'une des extrêmités d'au moins une de ces deux pièces comprenant une pièce en matériau non magnétique affleurant ladite face plane, les deux couches en matériau magnétique étant réalisées sur ladite face plane avec l'entrefer située à l'endroit de la pièce en matériau non magnétique

Enfin l'invention concerne un procédé de réalisation d'une tête magnétique caractérisée en ce qu'il comporte les étapes suivantes :

– une première étape de réalisation d'une pièce en matériau magnétique comportant au moins une face plane et incorporé dans cette pièce un élément en matériau non magnétique affleurant la face plane sur une surface déterminée ;
– une deuxième étape de réalisation d'une ouverture dans la pièce en matériau magnétique et atteignant l'élément en matériau non magnétique de telle façon que cet élément constitue une interruption du circuit magnétique constitué par ladite pièce ;
– une troisième étape de réalisation de pôles magnétiques situés sur la face plane s'étendant par rapport à l'axe longitudinal de la tête jusqu'à recouvrir le matériau magnétique situé de chaque côté de l'élément non magnétique et possédant deux bords séparés par un entrefer situé sur ladite surface déterminée occupée par l'élément en matériau non magnétique, ces pôles magnétiques étant réalisés à l'aide d'une couche mince de matériau magnétique ;
– une quatrième étape de réalisation d'au moins un bobinage d'induction magnétique passant par l'ouverture et entourant le circuit magnétique de la pièce en matériau magnétique.

Les différents objets et caractéristiques de l'invention apparaîtront plus clairement à l'aide de la description qui va suivre faite en se reportant aux figures annexées qui représentent :

– la figure 1, une tête magnétique planaire connue dans la technique et décrite précédemment ;

– les figures 2 et 3 une forme de réalisation de pôles magnétiques séparés par un entrefer pour une tête magnétique planaire, tel que cela est connu dans la technique et décrites précédemment ;

– la figure 4, une vue en perspective d'un exemple de réalisation d'une tête magnétique selon l'invention,

– la figure 5, une vue de face de la tête magnétique de la figure 1 ;

– la figure 6, une vue en perspective d'une variante de réalisation d'une tête magnétique selon l'invention ;

– la figure 7, une vue de face de la tête magnétique de la figure 6 ;

– les figures 8 à 11 des étapes d'un exemple de procédé de réalisation d'une tête magnétique selon l'invention.

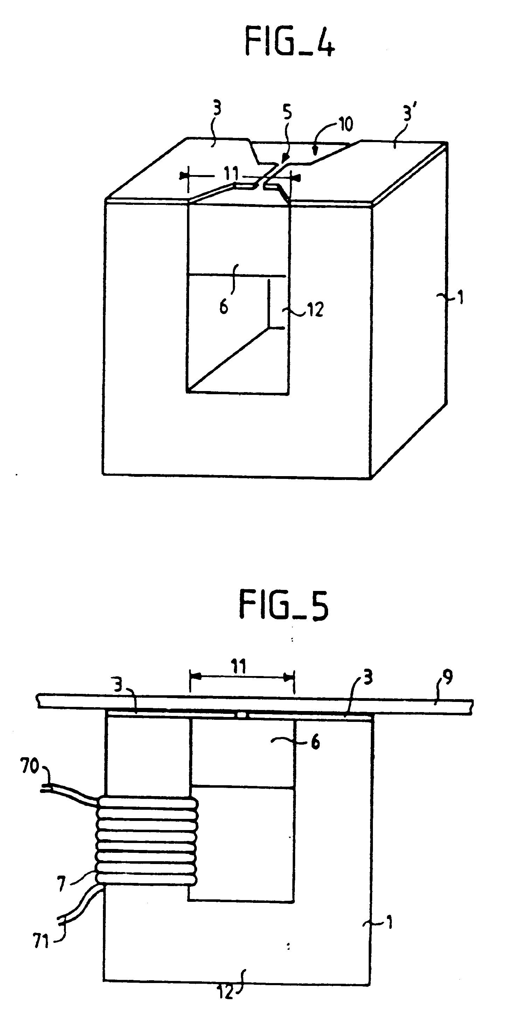

En se reportant aux figures 4 et 5 on va tout d'abord décrire un exemple de réalisation de la tête magnétique selon l'invention :

Cette tête comporte un circuit magnétique réalisé sous forme massive. Ce circuit magnétique comporte une face plane 10. Sensiblement au milieu de cette face plane, le circuit magnétique est interrompu sur une largeur 11 et comporte dans l'interruption un élément en matériau non magnétique 6. Sur la face 10 comportant du matériau non magnétique (6) avec de part et d'autre du matériau magnétique (1), sont réalisés deux pôles magnétiques 3 et 3′ séparés par un entrefer 5 situé sensiblement au milieu de l'élément 6. Ces pôles magnétiques sont réalisés à l'aide d'un matériau magnétique en couche mince. Chaque pôle recouvre le matériau magnétique situé d'un coté de l'élément 6 et se rétrécit, sur la pièce 6 en matériau non magnétique, jusqu'à l'entrefer 5. Ainsi le circuit magnétique 1 se referme par les pôles magnétiques 3 et 3′ et par l'entrefer 5. La largeur 11 de l'élément en matériau non magnétique 6 est nettement plus grande que la largeur de l'entrefer 5 de façon que le champ magnétique se referme par l'entrefer 5.

Le circuit magnétique possède une ouverture 12 permettant, comme représenté en figure 5, le bobinage d'un enroulement 7 d'induction de champ magnétique pouvant être alimenté en courant par des connexions 70 et 71. Cet enroulement permet alors l'induction d'un champ magnétique dans le circuit magnétique. Sur la figure 5, on a représenté qu'un seul enroulement 7 mais il est évident que l'on peut en prévoir plusieurs.

Les pôles magnétiques 3, 3′ peuvent être réalisés de façon que l'entrefer 5 soit perpendiculaire par rapport à l'axe XX′ de déplacement du support d'enregistrement, mais ils peuvent également être tels que l'entrefer 5 fasse un angle différent de 90 degrés.

Selon l'invention, on a ainsi réalisé une tête d'enregistrement/lecture de forme planaire permettant d'enregistrer sur une bande magnétique ou de lire celle-ci

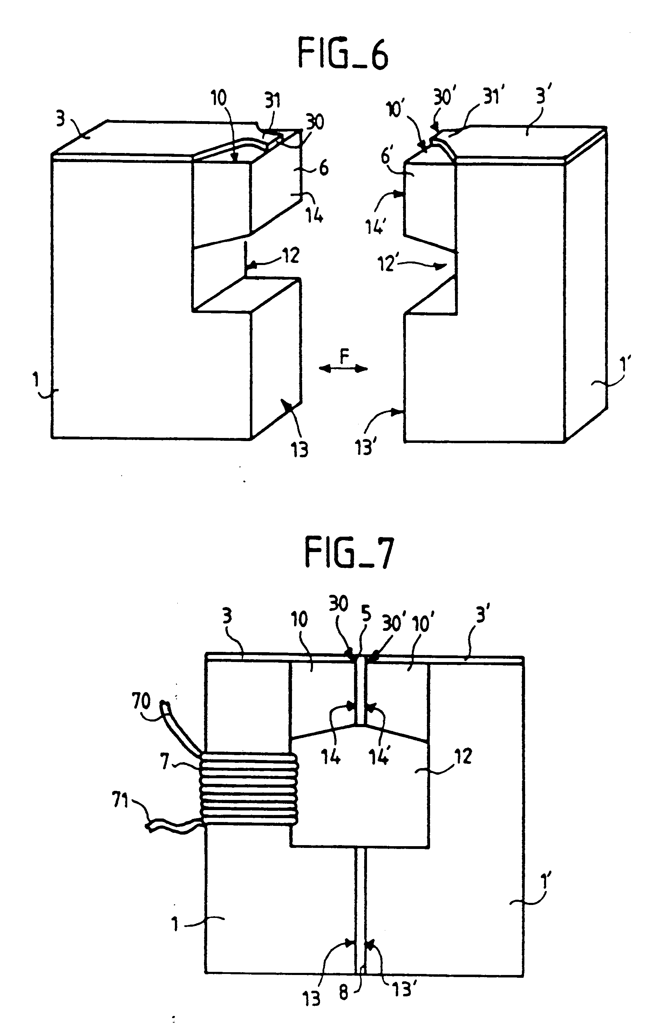

La figure 6 représente une variante de réalisation d'une tête magnétique planaire selon l'invention.

Cette tête magnétique comporte deux circuits magnétiques 1 et 1′ qui ont été séparés sur la figure 6 pour fournir une représentation plus claire.

Chaque circuit magnétique comporte une pièce en matériau non magnétique 6, 6′. Chaque pièce 6,6′ comporte une face 14,14′ qui est dans le même plan qu'une face 13,13′ du circuit magnétique 1,1′. Les deux circuits magnétiques 1, 1′ sont accolés l'un à l'autre selon la flèche F, par les faces 13, 13′et 14, 14′.

Les parties supérieures des circuits magnétiques 1, 1′ et des pièces en matériau non magnétique 6, 6′ comportent des faces planes 10,10′. Sur ces faces planes 10,10′ se trouvent des pôles magnétiques 3, 3′ constitués d'une couche mince d'un matériau magnétique.

Chaque pôle magnétique 3,3′ affleure la face 14, 14′ de la pièce en matériau non magnétique 6, 6′. Chaque pôle se termine ainsi par une face (30, 30′) contenue dans le même plan que les faces 14, 14′ des pièces 6, 6′.

De plus, chaque pôle magnétique 3, 3′ possède, aux abords de sa face 30, 30 ′, un rétrécissement 31, 31′ dont la forme permet la concentration du flux magnétique.

Les deux circuits magnétiques étant accolés selon la flèche F, les faces 13 et 13′ sont en vis à vis et les faces 30 et 30′ des pôles sont également en vis à vis. Comme cela est représenté en figure 7, les deux circuits magnétiques sont rendus solidaires l'un de l'autre par une couche d'un matériau de collage placée entre les faces 13, 13′ et 14, 14′. Les faces 13 et 13′ sont collées par une couche 8. Les faces 14, 14′ et 30, 30′ sont collées par une couche 5.Le matériau de collage peut être un matériau à base de verre.

La couche 5 tient lieu d'entrefer entre les faces 30 et 30′ les pôles magnétiques. Le matériau de collage peut être un matériau à base de verre. Un bobinage 7, alimenté en circuit par les connexions 70, 71 et entourant une branche d'un circuit magnétique, complète la tête d'enregistrement lecture.

Il est à noter que les faces 30, 13, 14 et 30′, 13′, 14′ peuvent être perpendiculaires à l'axe XX′ de déplacement d'un support d'enregistrement (non représenté). Elles peuvent également, tout en étant parallèles entre elles, faire un angle différent de 90 degrés avec cet axe XX′.

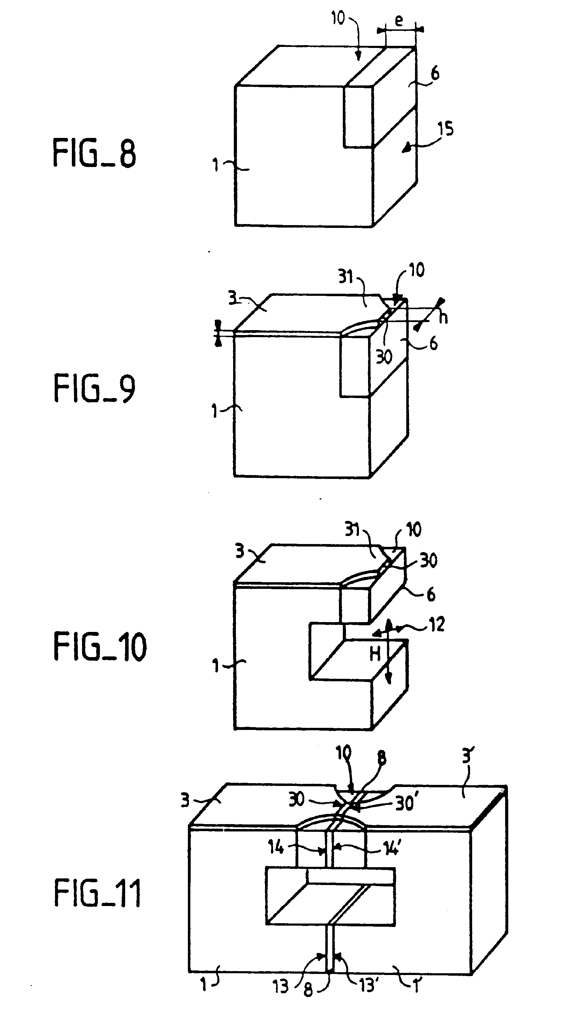

En se reportant aux figures 8 à 11, on va maintenant décrire un procédé de réalisation selon l'invention de la tête magnétique planaire des figures 6 et 7.

Lors d'une première étape (Figure 8) de ce procédé on réalise deux pièces 1 en matériau magnétique comportant dans un angle de la pièce, un élément 6 de matériau non magnétique. Cet élément 6 affleure une face 10 et une face 15 de la pièce 1. L'épaisseur e de la pièce 6 selon la face 10 sera par exemple d'une centaine de micromètres.

Au cours d'une deuxième étape (Figure 9), on réalise sur la face 10 de chaque pièce 1, un pôle magnétique 3 en couche mince. Le pôle recouvre sur la face 10 le matériau magnétique de la pièce 1 de façon à recevoir tout le champ magnétique circulant dans le circuit magnétique de la tête magnétique. Sur la zone de matériau non magnétique de la face 10, le pôle 3 est réalisé avec un rétrécissement 31. L'épaisseur h de la couche mince de matériau magnétique sera par de 1 à 3 micromètres par exemple.

La réalisation du pôle magnétique se fera par tout procédé de dépôt tel qu'un procédé d'épitaxie suivi d'une opération de gravure pour réaliser le rétrécissement 30.

Au cours d'une troisième étape, on réalise une encoche 12 à partir de la face 15 de la pièce 1. Cette encoche atteint l'élément 6, voire même comme représenté en figures 9 et 10, enlève une partie de l'élément 6. La hauteur H de cette encoche sera par exemple de 200 à 300 micromètres et sa profondeur également de 200 à 300 micromètres.

Au cours d'une quatrième étape représentée en figure 11, on colle l'une à l'autre deux pièces telle celle représentée en figure 10. Les faces 13 et 13′ de deux pièces sont collées l'une à l'autre par une couche de colle 8. Les faces 30 et 30 ′ ainsi que 14 et 14 ′ sont collées l'une à l'autre par une couche de colle 5 . La couche de colle 5 constitue l'entrefer d'enregistrement de la tête magnétique. L'épaisseur de la couche 5 est alors d'environ 0,2 micromètre.

Le collage se fait par soudure à l'aide d'un matériau non magnétique à base de verre par exemple. La technique utilisée peut être un sputtering (pulvérisation) de verre.

Au cours d'une cinquième étape non représentée sur les figures on réalise un ou plusieurs bobinages d'induction de champ magnétique entourant au moins une pièce 1 du circuit magnétique.

Selon une première variante du procédé ainsi décrit, l'étape de réalisation d'une encoche 12 dans chaque pièce 1 est réalisée avant la deuxième étape de réalisation du pôle magnétique 3.

Selon une deuxième variante du procédé de l'invention la cinquième étape de réalisation de bobinage est prévue après l'étape de réalisation d'une encoche 12 et avant l'étape de collage de deux pièces 1, 1′ entre elles.

Selon une troisième variante de réalisation du procédé de l'invention, l'étape de réalisation de pôles magnétiques (3,3′) est prévue après collage de deux pièces 1, 1′ entre elles. Les pôles magnétiques 3, 3′ séparés par un entrefer 5 sont alors réalisés sur les faces 10, 10′ par une technique connue telle que celle décrite dans la demande de brevet français n° 86 14974.

Le procédé de l'invention et toutes les variantes ainsi décrites prévoient, avant collage de deux pièces 1, 1′, un polissage des faces 30, 13, 14 et 30′, 13′, 14′.

De plus, selon l'invention ces faces peuvent être perpendiculaires à un axe XX′ de déplacement d'un support magnétique devant la tête, mais selon une autre variante de réalisation du procédé de l'invention on prévoit une phase d'usinage suivie d'une phase de polissage des faces 13, 14 et 30 selon un angle déterminé par rapport à l'axe XX′ cela pour une pièce 1. La pièce 1′ à coller à la pièce 1 subit durant ces phases un usinage et un polissage des faces 13′, 14′, 30′ selon un angle supplémentaire (à 180 degrés) de l'angle précédent par rapport à l'axe XX′.

Selon une autre variante de réalisation après réalisation des pôles magnétiques et collage de deux pièces 1,1′, la tête magnétique est revêtue sur ces pôles 3, 3′ et sur sa face 10, 10′, d'une couche d'un matériau non magnétique tel qu'un matériau à base de silice. Ensuite cette couche est usinée et polie jusqu'à atteindre les pôles magnétiques 3, 3′. Cet usinage et ce polissage peut se faire de façon à donner une courbure convexe à la tête magnétique. Du reste il est à noter que les faces 10, 10′ peuvent être elles-mêmes usinées de façon à ce que la tête magnétique présente une courbure.

Le procédé de réalisation décrit précédemment et ses variantes permet d'obtenir une tête magnétique conforme aux figures 6 et 7. Pour obtenir une tête magnétique conforme aux figures 4 et 5, l'invention prévoit un procédé selon lequel on réalise une ouverture 12, dans une pièce 1 comportant une face 10 et un élément en matériau non magnétique 6 intégré dans la pièce 1 et affleurant la face 10. Cette ouverture 12 est telle que l'élément en matériau non magnétique 6 détermine une interruption du circuit magnétique 1.

Ensuite, les pôles magnétiques 3 et 3′ sont réalisés sur la face 10 selon une technique telle que celle décrite dans la demande de brevet français FR-A-2.605.783 avec l'entrefer perpendiculaire ou en biais par rapport à l'axe XX′.

Enfin le ou les bobinages sont réalisés autour d'un circuit magnétique.

Il est bien évident que la description qui précède n'a été faite qu'à titre d'exemple non limitatif. D'autres variantes peuvent être envisagées sans sortir du cadre de l'invention. Les exemples numériques n'ont été fournis que pour illustrer la description.

## Revendications

1. Tête magnétique comprenant un circuit magnétique (1) de forme massive comportant une surface (10) parallèle à la face d'enregistrement de la tête caractérisée en ce que la tête magnétique comporte également :

– un élément non magnétique (6) interrompant le circuit magnétique et affleurant ladite surface (10) ;

– deux couches planaires d'un matériau magnétique (3,3') formant les pôles magnétiques de la tête, déposées sur ladite surface définie par l'élément non magnétique (6) et le circuit magnétique, recouvrent au moins partiellement le matériau magnétique situé sur les deux côtés de l'élément non magnétique (6), complètent ainsi le circuit magnétique de la tête et sont séparées par un entrefer (5) situé à l'endroit du matériau non magnétique (6).

2. Tête magnétique selon la revendication 1, caractérisée en ce que le circuit magnétique comporte deux pièces en forme de "U" (1, 1') ayant ces extrêmités (13, 13' et 14, 14') collées l'une à l'autre par une couche de colle, une des extrêmités (14, 14') d'au moins une de ces deux pièces (1, 1') comprenant une pièce en matériau non magnétique (6) affleurant ladite surface plane (10).

3. Tête magnétique selon la revendication 2, caractérisée en ce que les bords (30, 30') des pôles magnétiques (3, 3') sont collés l'un à l'autre par ladite couche de colle qui forme alors l'entrefer qui doit exister entre lesdits pôles.

4. Tête magnétique selon la revendication 2, caractérisée en ce que les deux pièces en forme de "U" sont de formes similaires symétriques par rapport à un plan contenant l'entrefer et perpendiculaire à la surface plane (10).

5. Tête magnétique selon la revendication 1, caractérisée en ce que les pôles magnétiques (3, 3') ont des formes rétrécies aux abords de l'entrefer (5).

6. Tête magnétique selon la revendication 1, caractérisée en ce que les bords (30 et 30') des pôles magnétiques (3, 3') se faisant face et définissant l'entrefer (5) font un angle de 90 degrés par rapport à l'axe longitudinal (XX') de la tête.

7. Tête magnétique selon la revendication 1, caractérisée en ce que les bords des pôles magnétiques (30, 30') se faisant face et définissant l'entrefer (5) font un angle différent de 90 degrés par rapport à l'axe longitudinal (XX') de la tête.

8. Tête magnétique selon la revendication 2, caractérisée en ce qu'au moins une des extrêmités collées (13, 13', 14, 14') de chaque pièce en forme de "U" (1, 1') forment un angle par rapport à l'axe longitudinal (XX') de la tête.

9. Procédé de réalisation d'une tête magnétique selon la revendication 1, caractérisé en ce qu'il comporte les étapes suivantes :

– une première étape de réalisation d'une pièce en matériau magnétique (1) comportant au moins une face plane (10) et, incorporé dans cette pièce (1), un élément (6) en matériau non magnétique affleurant la face plane (10) sur une surface déterminée ;

– une deuxième étape de réalisation d'une ouverture (12) dans la pièce en matériau magnétique (1) et atteignant l'élément en matériau non magnétique (6) de telle façon que cet élément (6) constitue une interruption du circuit magnétique constitué par ladite pièce (1) ;

– une troisième étape de réalisation de pôles magnétiques (3,3') situés sur la face plane (10) s'étendant par rapport à l'axe longitudinal de la tête jusqu'à recouvrir le matériau magnétique situé de chaque côté de l'élément non magnétique (6) et possédant deux bords (30, 30') séparés par un entrefer (5) situé sur ladite surface déterminée occupée par l'élément en matériau non magnétique (6), ces pôles magnétiques étant réalisés à l'aide d'une couche mince de matériau magnétique ;

– une quatrième étape de réalisation d'au moins un bobinage (7) d'induction magnétique passant par l'ouverture (12) et entourant le circuit magnétique de la pièce en matériau magnétique (1).

10. Procédé de réalisation d'une tête magnétique selon la revendication 2, caractérisé en ce qu'il comporte les étapes suivantes :

– une première étape de réalisation d'au moins deux pièces en matériau magnétique (1, 1') comportant chacune une première face plane (10, 10'), une deuxième face plane (15, 15'), et incorporé dans chacune de ces pièces, un élément (6,6') en matériau non magnétique affleurant la première face plane (10, 10') et la deuxième face plane (15, 15').

– une deuxième étape de réalisation dans chaque pièce (1, 1') d'une encoche (12, 12') dans la deuxième face plane (15, 15') de telle façon que l'on ait, d'un côté de l'encoche, une face (14, 14') de l'élément en matériau non magnétique (6, 6') et de l'autre côté de l'encoche, une face (13, 13') du matériau magnétique de ladite pièce (1, 1') ;

– une troisième étape de collage de deux pièces en matériau magnétique (1, 1') par collage entre elles des faces (14, 14') de matériau non magnétique et les faces (13, 13') entre elles de matériau magnétique ;

– une quatrième étape de réalisation sur les premières faces (10, 10') des deux pièces (1, 1') d'une couche mince d'un matériau magnétique s'étendant par rapport à l'axe longitudinal de la tête jusqu'à recouvrir le matériau magnétique (1, 1') situé de chaque côté de l'élément non magnétique (6, 6') et réalisation dans cette couche de deux pôles magnétiques (3, 3') séparés par un entrefer (5) situé au dessus des éléments en matériau non magnétique (6,6').

– une cinquième étape de réalisation d'au moins un bobinage (7) d'induction magnétique passant par les encoches (12,12') entourant une partie du circuit magnétique d'une pièce (1,1') en matériau magnétique.

11. Procédé selon la revendication 10, caractérisé en ce que la quatrième étape de réalisation de pôles magnétiques (3, 3') sur les premières faces (10, 10') est prévue avant la troisième étape de collage.

12. Procédé selon la revendication 10, caractérisé en ce que la troisième étape de collage est précédée d'une phase de polissage des faces (13, 13', 14, 14') à coller.

13. Procédé selon la revendication 10, caractérisé en ce que la troisième étape de collage se fait par soudure avec un matériau à base de verre.

14. Procédé selon la revendication 10, caractérisé en ce que la cinquième étape de réalisation d'au moins un bobinage est prévu après la deuxième étape de réalisation d'encoches et avant la troisième étape de collage par réalisation d'au moins un bobinage autour d'une pièce en matériau magnétique (1, 1') et passant par l'encoche (12, 12') de cette pièce.

15. Procédé selon la revendication 10, caractérisé en ce que la quatrième étape de réalisation des pôles magnétiques (3, 3') prévoit de fabriquer un rétrécissement (31, 31') des pôles aux abords de l'entrefer.

16. Procédé selon la revendication 10, caractérisé en ce que la première étape de réalisation des pièces en matériau magnétique (1,1') comporte un usinage des deuxième faces (15, 15') selon un angle différent de 90 degrés par rapport à l'axe (XX') longitudinal de la tête magnétique à obtenir.

17. Procédé selon la revendication 10, caractérisé en ce que la troisième étape de réalisation de pôles magnétique est suivie d'une étape de dépôt d'une couche d'un matériau non magnétique sur les premières faces (10, 10') et sur les pôles magnétiques (3, 3'), puis d'une étape d'usinage et de polissage de cette couche jusqu'à atteindre les pôles magnétiques (3,3').

18. Procédé selon la revendication 17, caractérisé en ce que la couche de matériau non magnétique est un matériau à base de silice.

19. Procédé selon la revendication 10, caractérisé en ce qu'il comporte une étape d'usinage en tambour de la tête magnétique.

**Patentansprüche**

1. Magnetkopf mit einem magnetischen Kreis (1) von massiver Form, der eine zur Aufzeichnungsseite des Kopfes parallele Fläche (10) aufweist, dadurch gekennzeichnet, daß der Magnetkopf außerdem umfaßt:

– ein nichtmagnetisches Element (6), das den magnetischen Kreis unterbricht und mit der erwähnten Fläche (10) bündig abschließt;
– zwei die Magnetpole des Kopfes bildende planare Schichten aus einem magnetischen Material (3, 3'), die auf der erwähnten, durch das nichtmagnetische Element (6) und den magnetischen Kreis definierten Fläche aufgebracht sind, die das auf den zwei Seitenflächen des nichtmagnetischen Elementes (6) befindliche magnetische Material wenigstens teilweise abdecken und so den magnetischen Kreis des Kopfes vervollständigen und die durch einen Luftspalt (5), der sich am Ort des nichtmagnetischen Materials (6) befindet, getrennt sind.

2. Magnetkopf gemäß Anspruch 1, dadurch gekennzeichnet, daß der magnetische Kreis zwei U-förmige Teile (1, 1') aufweist, deren Enden (13, 13' und 14, 14') mittels einer Klebeschicht miteinander verklebt sind, wobei eines der Enden (14, 14') wenigstens eines dieser zwei Teile (1, 1') ein Teil aus einem nichtmagnetischen Material (6) aufweist, das mit der erwähnten ebenen Fläche (10) bündig abschließt.

3. Magnetkopf gemäß Anspruch 2, dadurch gekennzeichnet, daß die Kanten (30, 30') der Magnetpole (3, 3') mittels der Klebeschicht miteinander verklebt sind, welche dann den Luftspalt bildet, der zwischen den beiden Polen vorhanden sein muß.

4. Magnetkopf gemäß Anspruch 2, dadurch gekennzeichnet, daß die beiden U-förmigen Teile ähnliche Formen besitzen, die in bezug auf eine den Luftspalt enthaltende und zu der ebenen Fläche (10) senkrechte Ebene symmetrisch sind.

5. Magnetkopf gemäß Anspruch 1, dadurch gekennzeichnet, daß die Magnetpole (3, 3') an den Rändern des Luftspalts (5) verjüngte Formen haben.

6. Magnetkopf gemäß Anspruch 1, dadurch gekennzeichnet, daß die Kanten (30 und 30') der Magnetpole (3, 3'), die sich einander gegenüberliegen und den Luftspalt (5) definieren, in bezug auf die Längsachse (XX') des Kopfes einen Winkel von 90° bilden.

7. Magnetkopf gemäß Anspruch 1, dadurch gekennzeichnet, daß die Kanten der Magnetpole (30, 30'), die sich einander gegenüberliegen und den Luftspalt (5) definieren, in bezug auf die Längsachse (XX') des Kopfes einen Winkel bilden, der von 90° verschieden ist.

8. Magnetkopf gemäß Anspruch 2, dadurch gekennzeichnet, daß wenigstens eines der verklebten Enden (13, 13', 14, 14') jedes U-förmigen Teils (1, 1') mit der Längsachse (XX') des Kopfes einen Winkel bildet.

9. Verfahren zur Herstellung eines Magnetkopfes gemäß Anspruch 1, dadurch gekennzeichnet, daß es die folgenden Schritte umfaßt:

– einen ersten Schritt zur Herstellung eines Teils (1) aus magnetischem Material, das wenigstens eine ebene Seite (10) hat und ein in diesem Teil (1) enthaltenes Element (6) aus nichtmagnetischem Material aufweist, das mit der ebenen Seite (10) auf einer bestimmten Fläche bündig abschließt;

– einen zweiten Schritt zur Herstellung einer Öffnung (12) in dem Teil (1) aus magnetischem Material, die bis zu dem Element (6) aus nichtmagnetischem Material reicht, derart, daß dieses Element (6) eine Unterbrechung des vom Teil (1) gebildeten magnetischen Kreises bildet;

– einen dritten Schritt zur Herstellung von Magnetpolen (3, 3′), die sich auf der ebenen Seite (10) befinden und sich bezüglich der Längsachse des Kopfes so weit erstrecken, daß sie das auf jeder Seite des nichtmagnetischen Elementes (6) befindliche magnetische Material abdecken, und die zwei Kanten (30, 30′) besitzen, die durch einen Luftspalt (5) getrennt sind, der sich in der bestimmten, vom Element (6) aus nichtmagnetischem Material belegten Fläche befindet, wobei diese Magnetpole mit Hilfe einer dünnen Schicht aus magnetischem Material hergestellt sind;

– einen vierten Schritt zur Herstellung von wenigstens einer Magnetinduktionswicklung (7), die durch die Öffnung (12) geht und den magnetischen Kreis des Teils (1) aus magnetischem Material umgibt.

10. Verfahren für die Herstellung eines Magnetkopfes gemäß Anspruch 2, dadurch gekennzeichnet, daß es die folgenden Schritte umfaßt:

– einen ersten Schritt zur Herstellung von wenigstens zwei Teilen (1,1′) aus magnetischem Material, die jeweils eine erste ebene Seite (10, 10′), eine zweite ebene Seite (15, 15′) und ein in jedem dieser Teile enthaltenes Element (6, 6′) aus nichtmagnetischem Material aufweisen, das mit der ersten ebenen Seite (10, 10′) und mit der zweiten ebenen Seite (15, 15′) bündig abschließt;

– einen zweiten Schritt, durch den in jedem Teil (1,1′) eine Aussparung (12, 12′) in der zweiten ebenen Seite (15, 15′) derart gebildet wird, daß auf einer Seite der Aussparung eine Seite (14, 14′) des Elementes (6,6′) aus nichtmagnetischem Material und auf der anderen Seite der Aussparung eine Seite (13, 13′) des magnetischen Materials des Teils (1, 1′) erhalten wird;

– einen dritten Schritt zum Verkleben der zwei Teile aus magnetischem Material (1, 1′) durch Verkleben der Seiten (14, 14′) aus nichtmagnetischem Material miteinander und der Seiten (13, 13′) aus magnetischem Material miteinander;

– einen vierten Schritt durch den auf den ersten Seiten (10, 10′) der zwei Teile (1, 1′) eine dünne Schicht aus magnetischem Material gebildet wird, die sich in bezug auf die Längsachse des Kopfes soweit erstreckt, daß sie das auf jeder Seite des nichtmagnetischen Elementes (6, 6′) befindliche magnetische Material (1, 1′) bedeckt, und durch den in dieser Schicht zwei Magnetpole (3, 3′) gebildet werden, die durch einen Luftspalt (5) getrennt sind, der sich oberhalb der Elemente aus nichtmagnetischem Material (6, 6′) befindet;

– einen fünften Schritt zur Herstellung wenigstens einer Magnetinduktionswicklung (7), die durch die Aussparungen (12, 12′) geht und einen Teil des Magnetkreises eines Teils (1, 1′) aus magnetischem Material umgibt.

11. Verfahren gemäß Anspruch 10, dadurch gekennzeichnet, daß der vierte Schritt zur Herstellung der Magnetpole (3, 3′) auf den ersten Seiten (10, 10′) vor dem dritten Schritt des Verklebens durchgeführt wird.

12. Verfahren gemäß Anspruch 10, dadurch gekennzeichnet, daß dem dritten Schritt des Verklebens eine Phase des Polierens der zu verklebenden Seiten (13, 13′, 14, 14′) vorhergeht.

13. Verfahren gemäß Anspruch 10, dadurch gekennzeichnet, daß der dritte Schritt des Verklebens durch Verschweißen mit einem Material auf Glasbasis ausgeführt wird.

14. Verfahren gemäß Anspruch 10, dadurch gekennzeichnet, daß der fünfte Schritt zur Herstellung von wenigstens einer Wicklung nach dem zweiten Schritt zur Herstellung von Aussparungen und vor dem dritten Schritt des Verklebens durchgeführt wird und durch die Herstellung wenigstens einer ein Teil (1,1′) aus magnetischem Material umgebenden und durch die Aussparung (12, 12′) dieses Teils gehenden Wicklung ausgeführt wird.

15. Verfahren gemäß Anspruch 10, dadurch gekennzeichnet, daß der vierte Schritt zur Herstellung der Magnetpole (3, 3′) die Ausbildung einer Einschnürung (31, 31′) der Pole an den Rändern des Luftspalts vorsieht.

16. Verfahren gemäß Anspruch 10, dadurch gekennzeichnet, daß der erste Schritt zur Herstellung der Teile (1,1′) aus magnetischem Material eine Formgebung der zweiten Seiten (15, 15′) in einem von 90° verschiedenen Winkel in bezug auf die Längsachse (XX′) des zu erhaltenden Magnetkopfes umfaßt.

17. Verfahren gemäß Anspruch 10, dadurch gekennzeichnet, daß dem dritten Schritt zur Herstellung der Magnetpole ein Schritt des Ablagerns einer Schicht aus nichtmagnetischem Material auf den ersten Seiten (10, 10′) und auf den Magnetpolen (3, 3′) und dann ein Schritt der Formgebung und des Polierens dieser Schicht bis zum Erreichen der Magnetpole (3, 3′) folgt.

18. Verfahren gemäß Anspruch 17, dadurch gekennzeichnet, daß die Schicht aus nichtmagnetischem Material ein Material auf der Basis von Siliciumoxid ist.

19. Verfahren gemäß Anspruch 10, dadurch gekennzeichnet, daß es einen Schritt umfaßt, in dem dem Magnetkopf die Form einer Trommel gegeben wird.

## Revendications

1. A magnetic head comprising a magnetic circuit (1) of a solid form comprising a surface (10) parallel to the recording surface of the head, characterized in that the magnetic head furthermore comprises:

– a non-magnetic element (6) interrupting the magnetic circuit and being flush with the said surface (10);

– two planar layers (3, 3') of a magnetic material and constituting the magnetic pôles of the head, placed on the said surface defined by the non-magnetic element (6) and the magnetic circuit, covering at least in part the magnetic material placed on the two sides of the non-magnetic element (6), thus completing the magnetic circuit of the head and being separated by an intermediate gap (5) placed at the site of the non-magnetic material (6).

2. The magnetic head as claimed in claim 1, characterized in that the magnetic circuit comprises two U-shaped members (1, 1') having ends (13, 13' and 14, 14') bonded to each other by a layer of adhesive, one of the ends (14, 14') of at least one of these two members (1, 1') comprising a member of a non-magnetic material (6) flush with the said plane surface (10).

3. The magnetic head as claimed in claim 2, characterized in that the edges (30, 30') of the magnetic pôles (3, 3') are bonded to each other by the said layer of adhesive, which thus constitutes the gap which is to exist between the said pôles.

4. The magnetic head as claimed in claim 2, characterized in that the two U-shaped members have a similar symmetrical configuration in relation to a plane containing the gap and being perpendicular to the plane surface (10).

5. The magnetic head as claimed in claim 1, characterized in that the magnetic pôles (3, 3') have tapering forms near the edges of the gap (5).

6. The magnetic head as claimed in claim 1, characterized in that the edges (30 and 30') of the magnetic pôles (3, 3') opposing each other and defining the gap (5) are at an angle of 90° in relation to the longitudinal axis (XX') of the head.

7. The magnetic head as claimed in claim 1, characterized in that the edges of the magnetic pôles (30, 30') opposing each other and defining the gap (5) are at an angle other than 90° in relation to the longitudinal axis (XX') of the head.

8. The magnetic head as claimed in claim 2, characterized in that at least one of the bonded ends (13, 13', 14, 14') of each U-shaped member (1, 1') is at an angle to the longitudinal axis (XX'} of the head.

9. A method for the manufacture of a magnetic head as claimed in claim 1, characterized in that it comprises the following steps:

– a first step of manufacturing a member of magnetic material (1)comprising at least one plane surface (10) and, incorporated in this member (1), an element (6) of non-magnetic material flush with the plane surface (10) on a given surface;

– a second step of making in the member (1) of magnetic material an opening (12) and extending up to the element of non-magnetic material (6) in such a manner that this element (6) constitutes an interruption of the magnetic circuit constituted by the said member (1);

– a third step of making magnetic pôles (3, 3') placed on the plane surface 110) and extending relative to the longitudinal axis of the head as far as to cover the magnetic material placed on each side of the non-magnetic element (6) and possessing two edges (30, 30') separated by a gap (5) placed on the said given surface occupied by the element (6) of non-magnetic material, said magnetic pôles being produced by means of a thin layer of magnetic material;

– a fourth step of making at least one magnetic induction coil (7) extending through the opening (12) and surrounding the magnetic circuit of the member of magnetic material (1).

10. A method for the manufacture of a magnetic head as claimed in claim 2, characterized in that it comprises the following steps:

– a first step of making at least two members of magnetic material (1, 1') each having a first plane surface (10, 10'), a second plane surface (15, 15') and incorporated in each of these members, an element (6, 6') of a non-magnetic material flush with the first plane surface (10, 10') and the second plane surface (15, 15');

– a second step of making in each member (1, 1') a recess (12, 12') in the second plane surface (15, 15') in such a manner that there is, on one side of the recess, a surface (14, 14') of the element (6, 6') of non-magnetic material and on the other side of the recess, a surface (13, 13') of the magnetic material of the said member (1, 1');

– a third step of bonding the two members of magnetic material (1, 1') by mutually bonding surfaces (14, 14') of non-magnetic material and surfaces (13, 13') of magnetic material;

– a fourth step of making, on the first surfaces (10, 10') of the two members (1, 1'), a thin layer of a magnetic material extending relative to the longitudinal axis of the head as far as the magnetic material (1, 1') placed on each side of the non-magnetic element (6, 6′) and making in this layer two magnetic pôles (3, 3′) separated by a gap (5) placed above the elements of non-magnetic material (6, 6′);

– a fifth step of making at least one magnetic induction coil (7) extending through the recesses (12, 12′) and surrounding a part of the magnetic circuit of one member (1, 1′) of magnetic material.

11. The method as claimed in claim 10, characterized in that the fourth step of making magnetic pôles (3, 3′) on the first surfaces (10, 10′) is performed prior to third step of bonding.

12. The method as claimed in claim 10, characterized in that the third step of bonding is preceded by a phase of polishing the surfaces (13, 13′, 14, 14′) to be bonded.

13. The method as claimed in claim 10, characterized in that the third step of bonding is performed by soldering with a glass-based material

14. The method as claimed in claim 10, characterized in that the fifth step of making at least one coil is provided after the second step of producing recesses and prior to the third step of bonding by producing at least one coil around a member of magnetic material (1, 1′) and passing through the recess (12, 12′) of this member.

15. The method as claimed in claim 10, characterized in that the fourth step of producing magnetic pôles (3, 3′) involves producing a restriction (31, 31′) of the pôles at the edges of the gap.

16. The method as claimed in claim 10, characterized in that the step of producing members of magnetic material (1, 1′) comprises machining the second surfaces (15, 15′) at an angle other than 90° in relation to the longitudinal axis (XX′) of the magnetic head to be produced.

17. The method as claimed in claim 10, characterized in that the third step of producing magnetic pôles is followed by a step of depositing a layer of non-magnetic material on the first surfaces (10, 10′) and on the magnetic pôles (3, 3′), and then a step of machining this layer until the magnetic pôles (3, 3′) are reached.

18. The method as claimed in claim 17, characterized in that the layer of non-magnetic material is a silica-based material. magnetic material is a silica-based material.

19. The method as claimed in claim 10, characterized in that it comprises a step of cylindrically machining the magnetic head.

# FIG_1

# FIG_2

# FIG_3

## FIG_4

## FIG_5

# FIG_6

# FIG_7

FIG_8

FIG_9

FIG_10

FIG_11